# EUROPÄISCHE PATENTSCHRIFT

(11) **EP 2 567 914 B1**
(45) Veröffentlichungstag und Bekanntmachung des Hinweises auf die Patenterteilung: **02.09.2015**
(21) Anmeldenummer: 12004320.3
(22) Anmeldetag: 06.06.2012
(51) Int. Cl.: B65G 47/76, B65G 21/20

(54) **Rollenbahn mit einer Ausschleuseinrichtung**
Roller conveyor with an ejector
Convoyeur à rouleaux muni d' un dispositif d'évacuation

(30) Priorität: 07.09.2011 DE 102011112737
(43) Veröffentlichungstag der Anmeldung: 13.03.2013
(73) Patentinhaber: recop electronic GmbH, 34123 Kassel (DE)
(72) Erfinder: Pröger, Uwe, 37269 Eschwege (DE)
(74) Vertreter: Walther, Walther & Hinz GbR

(56) Entgegenhaltungen:
- EP-B1- 1 012 084
- US-A- 3 045 792

## Beschreibung

Die Erfindung betrifft eine Rollenbahn mit einer Ausschleuseinrichtung für Stückgüter, z. B. Kästen, Trays u.ä., wobei die Ausschleuseinrichtung eine Mehrzahl von in Reihe angeordneter Abweiser aufweist, wobei die Abweiser aus der Rollenbahn ausfahrbar und quer zur Transportrichtung in der Rollenbahn angeordnet sind, wobei ein Abweiser ein Abweisschild aufweist, wobei das Abweisschild mit einer Hubeinrichtung zum Anheben und Absenken des Abweisschildes versehen ist.

Eine Rollenbahn mit einer Ausschleuseinrichtung zum Zwecke des Sortierens von auf einer solchen Rollenbahn ankommender Kästen, insbesondere Getränkekästen, ist aus dem Stand der Technik hinreichend bekannt. So ist z. B. aus der EP 1 609 747 B1 eine Ausschleuseinrichtung bekannt, die oberhalb einer Rollenbahn bzw. eines Rollentisches angeordnet ist, wobei die Ausschleuseinrichtung aus einer Mehrzahl hintereinander angeordneter Abweiser ausgebildet ist, die nacheinander in den Weg des auszuschleusenden Getränkekastens einfahrbar sind. Der Ausschleusvorgang eines solchen Getränkekastens erfolgt hierbei sanft, was insbesondere von Vorteil ist, wenn die fraglichen, auszuschleusenden Getränkekästen entweder leer oder z. B. mit PET-Flaschen gefüllt sind, wobei solche Getränkekästen mit PET-Flaschen derart ausgeleitet werden, dass die Gefahr des Drehens der Kästen nicht besteht.

Die zuvor genannte Ausschleuseinrichtung hat einen gewissen Hub, der ausreichend ist, um Getränkekästen jedweder Art sicher ausschleusen zu können.

Nun ist allerdings auch bekannt, dass nicht nur Flaschenkästen auf einer solchen Rollenbahn ausgeschleust werden sollen, sondern auch Aufnahmen bekannt sind, die unter anderem auch Flaschen aufnehmen, die aber nur eine geringe Höhe aufweisen. Bekannt sind insofern sogenannte Trays, die eine Höhe von 10 bis 12 cm aufweisen, und in denen Flaschen angeordnet sind, die den vorhandenen Kästen nicht zugeordnet werden können. Diese Trays können von der oberhalb der Rollenbahn angeordneten Ausschleuseinrichtung nicht erfasst werden. Die einzelnen Abweiser weisen hierzu eine zu geringe Länge auf. Es sei an dieser Stelle darauf hingewiesen, dass eine beliebige Erhöhung der Länge der Abweiser nicht möglich ist, da ansonsten die Gefahr besteht, dass aufgrund des erhöhten Moments bei anlaufenden Kästen die Abweiser sich verbiegen.

Die US 3,045,792 A zeigt eine Rollenbahn mit derart beabstandet zueinander angeordneten Rollen, dass zwischen den Rollen genügend Platz ist, um Abweiser zwischen den Rollen hindurchzuführen. Nachteilig hierbei ist die Notwendigkeit einer gewissen Mindestgröße der auf der Rollenbahn transportierten Güter. Sind die zu transportierenden Güter von der Grundfläche zu klein, ergibt sich ein hakeliger Lauf der Güter auf der Rollenbahn, was unter Anderem zu einer erhöhten Geräuschentwicklung führt. Darüber hinaus besteht die Gefahr, dass kleinere Güter durch den Schlitz zwischen den Rollen fallen oder hängenbleiben.

Das DE 72 44 076 U beschreibt eine Ausschleusvorrichtung mit einer Rollenbahn, wobei zum Ausschleusen die Gegenstände angehoben werden und in angehobenem Zustand von der Rollenbahn weggezogen werden. Hierbei ist wesentlich, dass sichergestellt ist, dass die auszuschleusenden Güter nicht von der Ausschleusvorrichtung rutschen. Ein schnelles Verschieben verbietet sich insofern. Deshalb ist auch die Ausschlussfrequenz gering.

Des Weiteren ist auch bereits aus dem Stand der Technik gemäß der DE 41 34 009 A1 bekannt Abweiser aus der Rollenbahn heraus vertikal nach oben auszufahren. Hierzu besitzt die Rollenbahn im Bereich einer solchen Ausschleuseinrichtung einen quer zur Transportrichtung der Rollenbahn verlaufenden Schlitz, in dem sich die einzelnen Abweiser mit ihren Abweisschilden befinden. Das heißt, dass die Rollenbahn durch die Ausschleuseinrichtung im Prinzip getrennt wird. Das bedeutet aber auch, dass die Rollen einer solchen Rollenbahn im Bereich des Schlitzes gesondert gelagert werden müssen, um ein Durchhängen der einzelnen Rollen zu vermeiden. Weiterhin ist erforderlich, dass die Rollen zu beiden Seiten des Schlitzes über einen entsprechenden Antrieb verfügen. Das heißt, dass bei einer solchen Rollenbahn nicht nur auf einer Seite für einen Antrieb der Rollen gesorgt werden muss, sondern auf beiden Seiten.

Mit der DE 41 34 009 A1 gleichartige Rollenbahnen sind aus der US 2011/0114444 A1 und der US 5,048,665 A bekannt. Auch bei der US 3,232,417 A sind die einzelnen Rollen der Rollenbahnen zum Durchlass von Abweisern geteilt.

Die der Erfindung zugrunde liegende Aufgabe besteht nunmehr darin, bei einer Rollenbahn der eingangs genannten Art dafür zu sorgen, dass eine Ausschleusung von auf der Rollenbahn ankommender Stückgüter ermöglicht wird, ohne dass die Rollen der Rollenbahn zu beiden Seiten der Rollenbahn über einen Antrieb verfügen müssen. Darüber hinaus sollen im Bereich einer jeden Rolle nur zwei Lagerstellen in der Rollenbahn vorgesehen sein.

Zur Lösung der Aufgabe wird erfindungsgemäß vorgeschlagen, dass die Rollen der Rollenbahn im Bereich der Abweisschilde derart profiliert sind, dass die Abweisschilde zwischen den Rollen eintauchen können, wobei die Rollen im Bereich der Abweisschilde einen geringeren Querschnitt aufweisen, als im übrigen Bereich der Rollenbahn, wobei die Abweisschilde in Hubrichtung verlaufende, im Bereich der Rollen angeordnete Aussparungen aufweisen, wobei die Profilierung der Rollen im Bereich der Aussparungen der Abweisschilde derart ist, dass im eingetauchten Zustand der Abweisschilde in die Rollenbahn, die Oberseite der Rollen über die Oberseite der Abweisschilde übersteht.

Hieraus wird deutlich, dass die einzelnen Rollen der Rollenbahn auch im Bereich der aus mehreren in Reihe angeordneten Abweisern mit den am oberen Ende angeordneten Abweisschilden durchgehend ausgebildet sind und demzufolge die entsprechenden Rollen an nur einer Seite angetrieben werden müssen und auch lediglich zwei Lagerstellen für die Rollen im Gestell der Rollenbahn erforderlich sind. Das heißt, die Rollen stellen jeweils einen einheitlichen, profilierten Körper mit einer einheitlichen Umrisslinie im Schnitt dar. Die Abweiser mithin die Abweisschilde sind in einer Reihe quer zur Transport- oder Laufrichtung in der Rollenbahn angeordnet. Der Begriff "quer" umfasst hierbei jede Ausrichtung der Abweiser winklig zur Laufrichtung der Rollenbahn, einschließlich eines bogenförmigen Verlaufs der hintereinander angeordneten Abweiser.

Die Rollen weisen im Bereich der Abweisschilde einen geringeren Querschnitt auf, als im übrigen Bereich. Das bedeutet, dass die einzelnen durchgehenden Rollen im Bereich der Abweisschilde über einen verjüngten Querschnitt verfügen, so dass im Bereich dieses verjüngten Querschnittes zwischen den einzelnen Rollen genug Raum für die Abweisschilde der einzelnen Abweiser vorhanden ist.

Um nun eine hinreichend große Abweisfläche durch die Abweisschilde bereitstellen zu können, ist vorgesehen, dass die Abweisschilde in Hubrichtung verlaufend im Bereich der Rollen angeordnete Aussparungen aufweisen. Hieraus wird deutlich, dass die einzelnen Abweisschilde, die in Reihe zueinander angeordnet sind eine im Wesentlichen durchgehende Barriere, also eine Barriere ohne Kanten bilden, die dafür sorgt, dass z. B. ein Getränkekasten oder ein Tray an der Ausschleuseinrichtung nicht hängen bleibt, sondern störungsfrei ausgeschleust wird. In diesem Zusammenhang hat es sich als insbesondere vorteilhaft erwiesen, wenn die Abweisschilde im Wesentlichen unmittelbar aneinander anschließen. Dies kann im Einzelnen dadurch bewerkstelligt werden, dass die Abweisschilde im Übergangsbereich der Abweiser zueinander nach Art von Nut und Feder miteinander in Verbindung stehen, also sozusagen ineinander greifend aneinander anliegen.

Ein jeder der Abweiser verfügt über einen gesonderten Antrieb, der insbesondere als pneumatischer Antrieb ausgebildet ist. Die einzelnen Antriebe der Abweiser sind darüber hinaus gesondert ansteuerbar, was zur Folge hat, dass die einzelnen Abweisschilde nacheinander entsprechend dem Verlauf des Kastens auf der Rollenbahn quer zur Transportrichtung auf bzw. abwärts bewegt werden. Die Folge hiervon ist, dass der Abstand von auszuschleusenden und nicht auszuschleusenden Kästen bei minimal 150 mm liegen kann. Im eingefahrenen Zustand überragen die Rollen etwas die Oberseiten der Abweisschilde, so dass der Transport von Stückgütern auf der Rollenbahn nicht behindert ist.

Anhand der Zeichnungen wird die Erfindung nachstehend beispielhaft näher erläutert.
- Fig. 1: zeigt in perspektivischer Darstellung einen Ausschnitt aus einer Rollenbahn mit mehreren in Reihe angeordneten Abweisern;
- Fig. 2: zeigt die Einzelheit II aus Fig. 1.

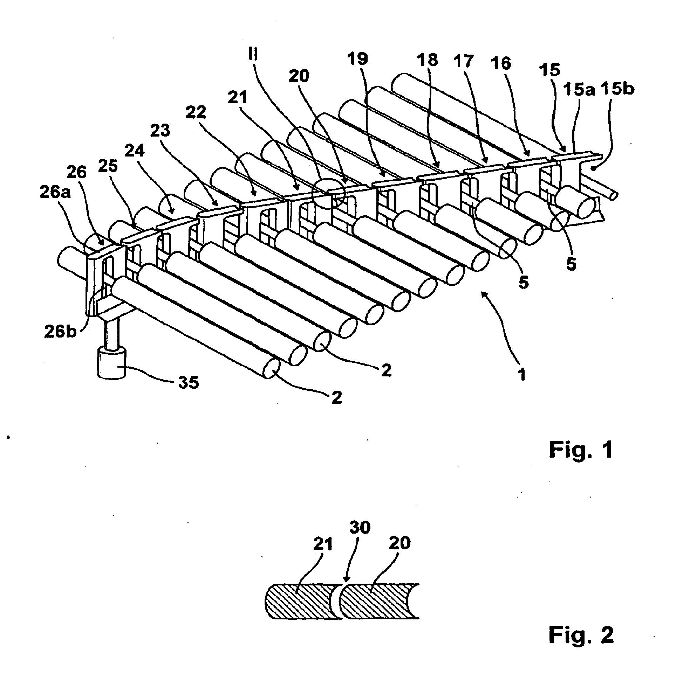

Der Ausschnitt einer Rollenbahn gemäß Fig. 1 ist insgesamt mit 1 bezeichnet. Die Rollenbahn 1 weist mehrere Rollen 2 auf, wobei die Rollen 2 einer solchen Rollenbahn endseitig in einem Gestell drehbar gelagert sind, was nicht dargestellt ist. Einzelne der Rollen 2 sind angetrieben. In der Rollenbahn befindet sich die mit 10 bezeichnete Ausschleuseinrichtung. Die Ausschleuseinrichtung 10 umfasst eine Mehrzahl von in Reihe angeordneten Abweisern 15 bis 26, die derart hintereinander in Reihe angeordnet sind, dass die einzelnen Abweisschilde 15a bis 26a im Kopfbereich aneinander anliegen. Das heißt, dass für beispielsweise einen ausgeschleusten Kasten im Wesentlichen keine Stufen oder Unebenheiten im Übergang zwischen den einzelnen Abweisschilden 15a bis 26a der einzelnen Abweiser 15 bis 26 bestehen.

Vorteilhaft ist in diesem Zusammenhang gemäß Fig. 2 vorgesehen, dass die Abweisschilde der Abweiser nach Art einer Nut- und Federverbindung 30 ineinander greifen. Die beiden ineinander greifenden Enden zweier Abweisschilde 20, 21 sind hierbei konvex und entsprechend konkav ausgebildet.

Die Rollen 2 besitzen im Bereich der in Reihe angeordneten Abweisschilde der Abweiser eine Profilierung 5 derart, dass die Abweisschilde 15a bis 26a in die Rollenbahn derart eintauchen können, dass die Oberseite der Rollen 2 über die Oberseite der Abweisschilde übersteht. Das heißt, dass im eingefahrenen Zustand der Abweisschilde auf der Rollenbahn transportierte Kästen nicht in Kollision mit den Abweisschilden gelangen. Die Profilierung 5 zeichnet sich im Einzelnen dadurch aus, dass der Durchmesser der Rolle 2 hier wesentlich geringer ist, als in den übrigen Bereichen der Rolle 2, die Rolle selbst aber weiterhin einteilig abgebildet ist. Zum Zwecke der Erzielung eines im Wesentlichen absatzfreien Überganges zwischen den einzelnen Abweisschilden der Abweiser besitzen die Abweisschilde 15a bis 26a sich über der Hubhöhe der Abweisschilde erstreckende Aussparungen 15b bis 26b. Das heißt kopfseitig stehen die Abweisschilde über die Profilierung der Rollen oder Walzen über. Die Anordnung der Aussparungen in den einzelnen Abweisschilden und deren Größe, d. h. deren seitliche Erstreckung ist abhängig von dem jeweiligen Zwischenraum zwischen zwei Rollen im Bereich der Profilierung 5 der beiden Rollen. In jedem Fall ist die Stirnseite, d.h. die Oberseite der einzelnen Schilde derart, dass sich ein im Wesentlichen stufenloser Übergang zwischen den einzelnen Schilden im Kopfbereich der jeweiligen Schilde ergibt, wie dies bereits in Bezug auf die Fig. 2 näher erläutert worden ist.

Die einzelnen Abweisschilde 15a bis 26a besitzen jeweils einen gesonderten Antrieb 35, der als pneumatischer Kolbenzylinderantrieb ausgebildet ist. Durch diesen Antrieb 35 und die gesonderte Ansteuerung eines jeden Antriebes 35 besteht demzufolge die Möglichkeit die Schilde jeweils einzeln anzuheben und abzusenken, so dass die einzelnen Abweisschilde dem Lauf beispielsweise eines Kastens auf der Rollenbahn beim Ausschleusvorgang folgen können. Das heißt, dass die Abweisschilde wellenförmig angehoben und abgesenkt werden.

### Bezugszeichenliste:

- 1: Rollenbahn
- 2: Rolle
- 5: Profilierung der Rolle
- 10: Ausschleuseinrichtung
- 15 - 26: Abweiser
- 15a - 26 a: Abweisschilde
- 15b - 26 b: Ausspannung in den Abweisschilden
- 30: Nut- und Federverbindung
- 35: Hubeinrichtung für Abweiser

## Patentansprüche

1. Rollenbahn (1) mit einer Ausschleuseinrichtung für Stückgüter, wobei die Ausschleuseinrichtung eine Mehrzahl von in Reihe angeordneter Abweiser (15 - 26) aufweist, wobei die Abweiser (15 - 26) aus der Rollenbahn (1) ausfahrbar und quer zur Transportrichtung in der Rollenbahn angeordnet sind, wobei ein Abweiser (15 - 26) ein Abweisschild (15a - 26a) aufweist, wobei das Abweisschild mit einer Hubeinrichtung (35) zum Anheben und Absenken des Abweisschildes (15a - 26a) versehen ist,
**dadurch gekennzeichnet,**
**dass** die Rollen (2) der Rollenbahn (1) im Bereich der Abweisschilde (15a - 26a) derart profiliert sind, dass die Abweisschilde (15a - 26a) zwischen den Rollen (2) eintauchen können,
wobei die Rollen (2) im Bereich der Abweisschilde (15a - 26a) einen geringeren Querschnitt aufweisen, als im übrigen Bereich der Rollenbahn (1),
wobei die Abweisschilde (15a - 26a) in Hubrichtung verlaufende, im Bereich der Rollen (2) angeordnete Aussparungen (15b - 26b) aufweisen,
wobei die Profilierung der Rollen (2) im Bereich der Aussparungen (15b-26b) der Abweisschilde derart ist, dass im eingetauchten Zustand der Abweisschilde in die Rollenbahn, die Oberseite der Rollen über die Oberseite der Abweisschilde übersteht.

2. Rollenbahn nach einem der voranstehenden Ansprüche,
**dadurch gekennzeichnet,**
**dass** die Abweisschilde (15a - 26a) im Wesentlichen unmittelbar aneinander anschließen.

3. Rollenbahn nach einem der voranstehenden Ansprüche,
**dadurch gekennzeichnet,**
**dass** die Abweisschilde (15a - 26a) im Übergangsbereich der Abweiser zueinander nach Art von Nut und Federverbindung (30) miteinander in Verbindung stehen.

4. Rollenbahn nach einem der voranstehenden Ansprüche,
**dadurch gekennzeichnet,**
**dass** die Hubeinrichtung (35) als pneumatischer Antrieb ausgebildet ist.

5. Rollenbahn nach einem der voranstehenden Ansprüche
**dadurch gekennzeichnet,**
**dass** die Antriebe der Abweiser (15-26) gesondert ansteuerbar sind. (15-26)

6. Rollenbahn nach einem der voranstehenden Ansprüche,
**dadurch gekennzeichnet,**
**dass** Rollen (2) der Rollenbahn (1) angetrieben sind.

## Claims

1. A roller conveyor (1) with a diverting device for general cargo,
wherein the diverting device has a plurality of deflectors (15 - 26) disposed in a row, wherein the deflectors (15 - 26) are disposed in the roller conveyor so as to be extendable transversely to the transport direction out of the roller conveyor (1), wherein a deflector (15 - 26) has a deflector shield (15a - 26a), wherein the deflector shield is provided with a lifting device (35) for lifting and lowering the deflector shield (15a - 26a),
**characterized in that**
in the area of the deflector shields (15a - 26a), the rollers (2) of the roller conveyor (1) are profiled in such a manner that the deflector shields (15a - 26a) can submerge between the rollers (2),
wherein the rollers (2) in the area of the deflector shields (15a - 26a) have a lesser cross-section than in the remaining area of the roller conveyor (1),
wherein the deflector shields (15a - 26a) have recesses (15b - 26b) disposed in the area of the rollers (2) and running in the direction of the stroke,
wherein the profile of the rollers (2) in the area of the recesses (15b - 26b) of the deflector shields is such that in the submerged state of the deflector shields in the roller conveyor, the upper side of the rollers protrudes over the upper side of the deflector shields.

2. The roller conveyor according to one of the afore-mentioned claims,
**characterized in that**
the deflector shields (15a - 26a) are substantially immediately adjacent to each other.

3. The roller conveyor according to one of the afore-mentioned claims,
**characterized in that**
in the transition area between the deflectors, the deflector shields (15a - 26a) are connected to each other in the manner of a tongue and groove joint (30).

4. The roller conveyor according to one of the afore-mentioned claims,
**characterized in that**
the lifting device (35) is configured as a pneumatic drive.

5. The roller conveyor according to one of the afore-mentioned claims,
**characterized in that**
the drives of the deflectors (15 - 26) are separately controllable.

6. The roller conveyor according to one of the afore-mentioned claims,
**characterized in that**
the rollers (2) of the roller conveyor (1) are driven.

## Revendications

1. Convoyeur à rouleaux (1) avec un dispositif de déviation pour des marchandises de détail, où le dispositif de déviation comporte une pluralité de déflecteurs (15 - 26) disposés en série, où le déflecteur (15 - 26) est disposé dans le convoyeur à rouleaux transversalement à la direction de transport et de manière à être déployable hors du convoyeur à rouleaux (1), où un déflecteur (15 - 26) comporte une plaque déflectrice (15a - 26a), où la plaque déflectrice est pourvue d'un dispositif de levée (35) pour lever et abaisser la plaque déflectrice (15a - 26a),
**caractérisé en ce que**
les rouleaux (2) du convoyeur à rouleau (1) dans la région de la plaque déflectrice (15a - 26a) sont profilés de telle manière que les plaques déflectrices (15a - 26a) peuvent s'immerger entre les rouleaux (2),
où les rouleaux (2) comportent une coupe transversale plus petite dans la zone des plaques déflectrices (15a - 26a) que dans les zones restantes du convoyeur de rouleaux (1),
où les plaques déflectrices (15a - 26a) comportent des évidements (15b - 26b) disposés dans la zone des rouleaux (2) et s'étendant dans la direction de course,
où le profil des rouleaux (2) dans la zone des évidements (15b - 26b) des plaques déflectrices est tel que dans l'état immergé des plaques déflectrices dans le convoyeur à rouleaux, le côté supérieur des rouleaux dépasse du côté supérieur des plaques déflectrices.

2. Convoyeur à rouleaux selon l'une quelconque des revendications précédentes,
**caractérisé en ce que**
les plaques déflectrices (15a - 26a) sont essentiellement immédiatement adjacentes l'une de l'autre.

3. Convoyeur à rouleaux selon l'une quelconque des revendications précédentes,
**caractérisé en ce que**
dans la zone de transition entre les déflecteurs, les plaques déflectrices (15a - 26a) sont connectées l'une à l'autre à la manière d'un assemblage à rainure et languette (30).

4. Convoyeur à rouleaux selon l'une quelconque des revendications précédentes,
**caractérisé en ce que**
le dispositif de levée (35) est configuré comme entraînement pneumatique.

5. Convoyeur à rouleaux selon l'une quelconque des revendications précédentes,
**caractérisé en ce que**
les entraînements des déflecteurs (15-26) sont actionnables séparément.

6. Convoyeur à rouleaux selon l'une quelconque des revendications précédentes,
**caractérisé en ce que**
les rouleaux (2) du convoyeur à rouleaux (1) sont entraîné.
